(19) Europäisches Patentamt / European Patent Office / Office européen des brevets

(11) **EP 2 950 066 A1**

(12) **EUROPEAN PATENT APPLICATION**

(43) Date of publication:
**02.12.2015 Bulletin 2015/49**

(51) Int Cl.:
**G01J 9/02** (2006.01)          **G02B 5/04** (2006.01)
**G02B 27/14** (2006.01)

(21) Application number: **14275130.4**

(22) Date of filing: **29.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **A Beamsplitter and Frequency Monitoring System**

(57)     A beamsplitter is disclosed for splitting an input beam of radiation which is incident upon the beamsplitter into at least one first and second output beam of radiation which propagate from the beamsplitter. The beamsplitter comprises a first beamsplitting portion for generating the first output beam and a second beamsplitting portion for generating the second output beam. The first portion comprises a front and rear planar surface orientated in a substantially parallel orientation, whereas the second portion comprises a front and rear planar surface orientated in a non-parallel orientation. The rear surface of the first portion comprises a first coating having a relatively low reflection coefficient for the radiation, and the front surface of the second portion comprising a second coating having a relatively high reflection coefficient for the radiation. The resulting first and second output beams propagate in non-parallel directions. A frequency monitoring system comprising a beamsplitter is also disclosed.

Figure 1

**Description**

The present invention relates to a beamsplitter and particularly, but not exclusively to a beamsplitter for splitting an input beam of radiation which is incident upon the beamsplitter into a first and second output beam of radiation which propagate from the beamsplitter. The present invention further relates to a frequency monitoring system for monitoring a frequency shift of a beam of radiation.

Optical techniques are often employed for making accurate measurements. For example, the velocity of aircraft may be determined by monitoring frequency shifts between a transmitted laser beam and the laser beam which is scattered from air molecules. Similar techniques are also employed when making weather predictions. However, optical techniques suffer from alignment problems particularly in harsh environments where the optical apparatus may be subject to mechanical vibration or movement. In such conditions, it can be difficult to preserve a level of alignment of laser beams with respect to the optical apparatus, to provide an accurate measurement.

In accordance with the present invention, as seen from a first aspect, there is provided a beamsplitter for splitting an input beam of radiation which is incident upon the beamsplitter into a first and second output beam of radiation which propagate from the beamsplitter, the beamsplitter comprising:

- a first beamsplitting portion for generating the first output beam and a second beamsplitting portion for generating the second output beam;

- the first portion comprising a front and rear planar surface orientated in a substantially parallel orientation;

- the second portion comprising a front and rear planar surface orientated in a non-parallel orientation;

- the rear surface of the first portion comprising a first coating having a relatively low reflection coefficient for the radiation, and the front surface of the second portion comprising a second coating having a relatively high reflection coefficient for the radiation;

- such that the first and second output beams propagate in non-parallel directions.

The provision of a first beamsplitting portion having parallel surfaces in combination with a second beamsplitting portion having non-parallel surfaces, creates a first and second output beam which propagate in directions which vary only slightly in response to changes in the incident angle of the input beam of radiation upon the beamsplitter. The beamsplitter thus desensitises the variation in output beam direction in comparison with variations in the incident angle.

In an embodiment, the front surface of the first portion comprises an anti-reflection coating for the input beam of radiation. As such the front surface of the first portion is arranged to receive the input beam of radiation and the anti-reflection coating maximises the coupling of radiation into the beamsplitter.

In an embodiment, the rear surface of the second portion comprises an anti-reflection coating for radiation incident thereon internally of the second portion. As such, the rear surface of the second portion is arranged to receive radiation which is reflected from the front surface of the second portion and the anti-reflection coefficient provides that the radiation incident thereon is substantially transmitted.

In an embodiment, the first coating comprises a reflection coefficient of substantially 0.5 for radiation incident thereon internally of the first portion, such that substantially 50% of the energy of the radiation beam which is incident thereon is reflected and substantially 50% of the energy of the radiation beam is transmitted out from the first portion through the rear surface, to form the first output beam.

In an embodiment, the front surface of the second portion comprises a reflection coefficient of substantially 1 for radiation incident thereon internally of the second portion, such that substantially 100% of the energy of the radiation beam which is incident thereon is reflected and substantially 0% of the energy of the radiation beam is transmitted out of the second portion through the front surface.

In an embodiment, the first and second portions comprise separate portions which are welded together using a cement to provide a low loss interface therebetween. However, in an alternative embodiment, the first and second portions may be formed integrally.

In an embodiment, the first and second portions are formed of fused silica.

In accordance with the present invention as seen from a second aspect, there is provided a frequency shift monitoring system for monitoring a frequency shift of a beam of radiation, the system comprising:

- a beam splitter according to the first aspect which is arranged to receive the beam of radiation and generate a first and second output beam;

- an etalon comprising first and second reflecting surfaces for reflecting the first and second output beams;

- a tuning arrangement for varying an optical path length of the first and second output beams through the etalon between the first and second reflecting surfaces; and,

- at least one detector for detecting an intensity of the first and second output beams which are transmitted through the etalon.

In an embodiment, the tuning arrangement comprises a refracting element, such as a prism, disposed in an optical path between the beamsplitter and the etalon, the element being rotatably mounted relative to the etalon for steering the first and second output beam relative to the first and second reflecting surfaces.

In an embodiment, the first output beam is directed substantially normal to the first and second reflecting surface and the second output beam is directed at an acute angle to the first and second reflective surface.

In an embodiment, the beamsplitter is orientated relative to the refracting element, such that the first and second output beams are incident upon the element at an angle corresponding to a minimal refraction of the first and second beams through the element.

In an embodiment, the system comprises a first and second detector for respectively detecting the intensity of the first and second output beams which are transmitted through the etalon.

In an embodiment, the system further comprises a processor for processing the intensity of the first and second output beams which are transmitted through the etalon to determine a relative change in intensity, and for subsequently determining a shift in frequency of the beam of radiation in dependence of the relative change in intensity.

Embodiments of the present invention will now be described by way of example only and with reference to the accompanying drawings, in which:

Figure 1 is a schematic illustration of the beam path through a beamsplitter according to an embodiment of the present invention;

Figure 2 is a graphical representation of the variation in deviation angle between the first and second output beams from the beamsplitter illustrated in figure 1, as a function of incident angle;

Figure 3 is a schematic illustration of a frequency monitoring system according to an embodiment of the present invention;

Figure 4 is a graphical representation of the variation in steered angle with incident angle for prisms having different apex angles; and,

Figure 5 is a graphical representation of the variation in steered angle over an incident angle range between 25° and 35°, for a prism having a 30° apex angle.

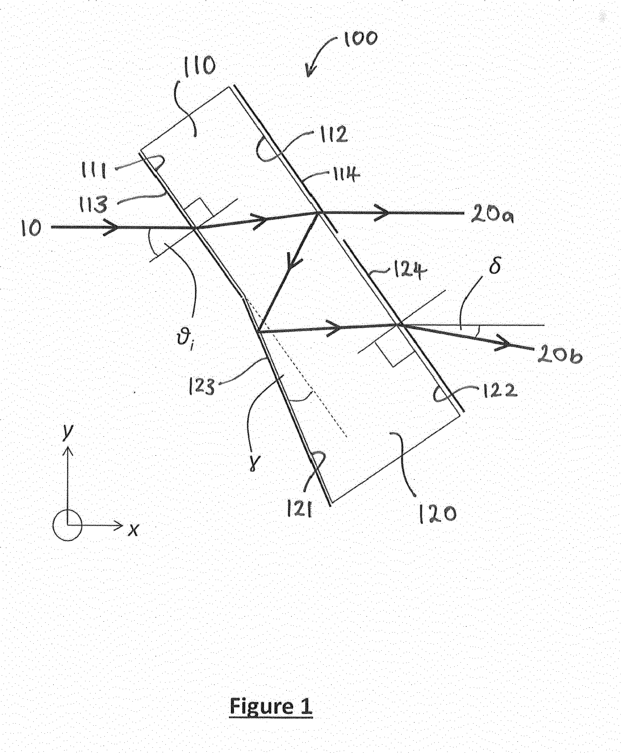

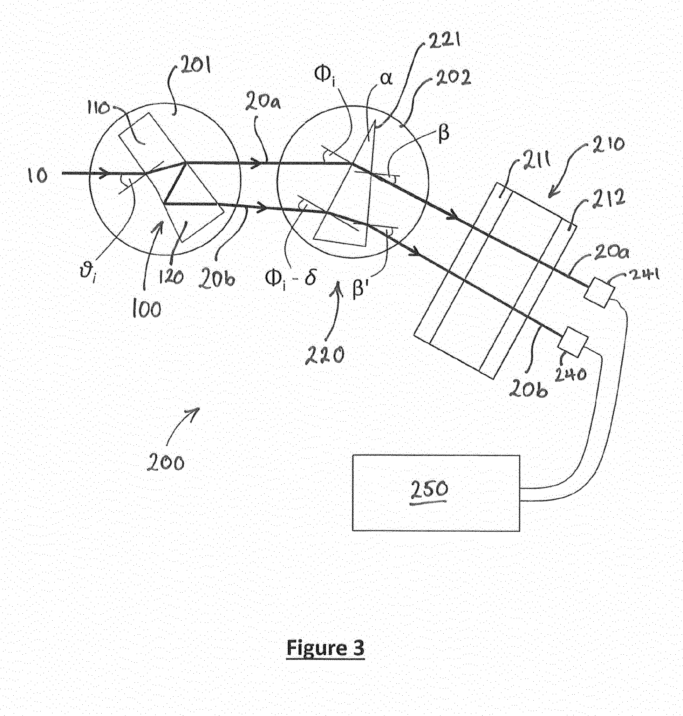

Referring to figure 1 of the drawings, there is illustrated a beamsplitter 100 according to an embodiment of the present invention for generating at least one first and second output beam of radiation 20a, 20b from an input or incident beam of radiation10. The incident beam of radiation 10 may be that generated by a source of lasing radiation (not shown) and comprise a coherent, collimated laser beam. The beam 10 is directed upon the beamsplitter 100 which is mounted upon a rotation stage 201 (as illustrated in figure 3 of the drawings) for permitting angular rotation of the beamsplitter 100 relative to the incident beam 10.

The beamsplitter 100 is formed of a material, such as fused silica, which is optically transmissive for the wavelength of radiation incident thereon, and comprises a first and second beamsplitting portion 110, 120 for separately generating the first and second output beam 20a, 20b. The first and second portion 110, 120 may be formed separately and physically coupled together using a cement (not shown), which also optically couples the portions to provide for a low loss interface. Alternatively however, the first and second portion 110, 120 may be formed integrally as a single-piece.

The first portion 110 comprises a front and rear substantially planar surface 111, 112, orientated in a substantially planar orientation, whereas the second portion 120 comprises a front and rear planar surface 121, 122 which extend in a substantially non-planar arrangement. The front and rear surface 111, 112, 121, 122 of each portion 110, 120 separately extend substantially opposite each other in spaced relation. In an embodiment, the rear surface 112, 122 of the first and second portion 110, 120 are coplanar, although the skilled person will recognise from the following description that the rear surface 112, 122 of the first and second portions 112, 122 may be angularly orientated. However, in order to simplify the trajectory of the first and second output beams 20a, 20b for subsequent alignment within an optical system, the front and rear surfaces 111, 112, 121, 122 of the first and second portions 110, 120 preferably extend substantially parallel to a rotational axis of the beamsplitter 100, which is substantially along the z-axis (out of page) illustrated in figure 1.

The front surface 111 of the first portion 110 comprises an anti-reflection coating 113 for the wavelength of incident beam of radiation, to maximise the coupling of the radiation into the first portion 110. The rear surface 112 of the first portion 110 comprises a coating 114 having a reflection coefficient of approximately 0.5, such that approximately 50% of the energy of the beam which is incident upon the rear surface 112 from within the first portion 110 is reflected within the beamsplitter 100 and approximately 50% of the energy is transmitted out from the beamsplitter 100 to form the first output beam 20a.

In contrast, the second portion 120 comprises a front surface 121 having a coating 123 disposed thereon having a reflection coefficient of approximately 1, such that substantially 100% of the radiation which is incident thereon from within the beamsplitter 100 is reflected internally of the beamsplitter 100. The rear surface 122 of the second portion 120 comprises an anti-reflection coating 124 for the wavelength of radiation incident internally thereon, such that substantially all the radiation which is incident on the rear surface 122 is transmitted out from the beamsplitter 100 to form the second output beam 20b. Accordingly, the beamsplitter 100 is arranged to partially reflect the incident beam of radiation 10 at the rear surface 112 of the first portion 110 toward the front surface 121 of the second portion 120, whereupon the radiation subsequently becomes reflected from the front surface 121 of the second portion 120 toward the rear surface 122 and transmitted therethrough as the second output beam 20b.

The parallel orientation of the front and rear surfaces 111, 112 of the first portion 110 results in the first output beam 20a propagating substantially parallel to the incident beam 10. However, the non-parallel orientation of the front and rear surfaces 121, 122 of the second portion 120 results in the second output beam 20b propagating with an angular deviation relative to the first output beam 20a. This angular deviation ($\delta$) is shown below as a function of the angular displacement ($\gamma$) of the front and rear surfaces 121, 122 of the second portion 120 from a parallel orientation, and the angle ($\theta_i$) of the incident beam 10 of radiation relative to the front surface 111 of the first portion 110.

$$\delta = \sin^{-1}\left\{n\left[\sin\left(2\gamma + \sin^{-1}\left\{\frac{\sin\theta_i}{n}\right\}\right)\right]\right\} - \theta_i \tag{1}$$

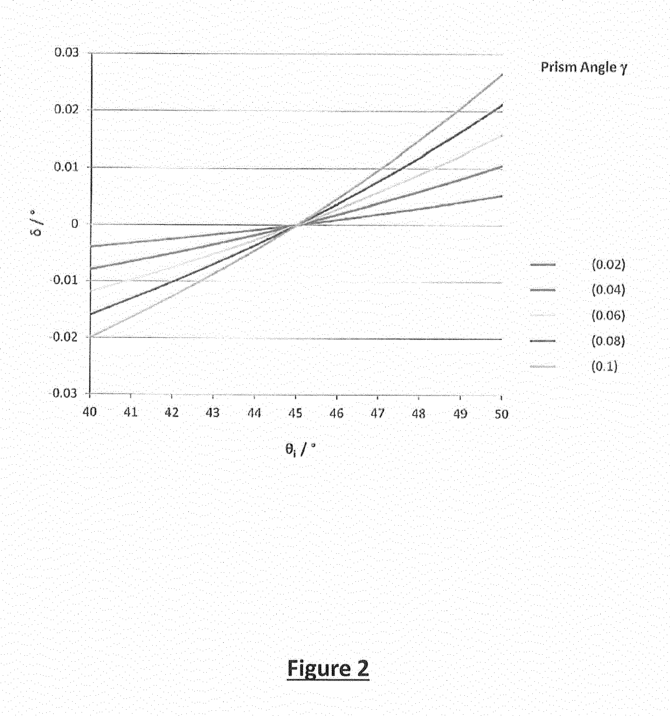

Here n is the refractive index of the beamsplitter, which for fused silica is approximately 1.48. The angular deviation between the first and second output beams 20a, 20b is shown graphically in figure 2 of the drawings, for different angular displacements ($\gamma$) of the front and rear surfaces 121, 122 of the second portion 120 of a beamsplitter 110, which is illuminated with a laser beam having a wavelength of approximately 355nm.

Upon referring to figure 2 it is evident that the angular deviation ($\delta$) can be more finely controlled compared with changes in incident angle ($\theta_i$), and that this degree of sensitivity can be pre-determined by the choice of angular displacement ($\gamma$). For example, differentiating equation 1 with respect to the incident angle ($\theta_i$) yields:

$$\frac{d\delta}{d\theta_i} = \frac{\cos(\delta) \cdot \cos\left(2\gamma + \sin^{-1}\left[\frac{\sin(\theta_i)}{n}\right]\right)}{\sqrt{1 - \frac{\sin^2(\theta_i)}{n^2}}\sqrt{1 - n^2\sin^2\left(\frac{2\gamma + \sin^{-1}(\theta_i)}{n}\right)}} \tag{2}$$

Therefore, it is evident from equation 2 that for an angular displacement $\gamma$=0.06°, the angular sensitivity at $\theta_i$ = 45°, namely the variation in angular deviation ($\delta$) per 1° variation in incident angle ($\theta_i$) is 0.0027°.

The fine angular control offered by the beamsplitter 10 according to the above described embodiment can be used to monitor for small frequency shifts and variations in the incident laser beam 10. Referring to figure 3 of the drawings there is illustrated a frequency monitoring system 200 according to an embodiment of the present invention, for monitoring for such variations in frequency. The system 200 comprises a beamsplitter 100 according to the above described embodiment (and as such, like features have been referenced using the same numerals) and an etalon 210, such as a Fabry Perot etalon comprising a first and second reflecting surface 211, 212 arranged in spaced relation. The reflecting surfaces 211, 212 are disposed adjacent each other in a substantially parallel orientation, and arranged to reflect radiation back and forth therebetween.

The etalon 210 is orientated relative to the beamsplitter 100, such as by effecting rotation the beamsplitter 100 using the rotation stage 201, such that the first output beam 20a propagates substantially normal to the reflecting surfaces 211, 212, whereas the second output beam 20b is incident at an acute angle thereto, namely the deviation angle $\delta$. However, it is to be appreciated that the first output beam 20a may alternatively be directed at an acute angle to the reflecting surfaces 211, 212. The system 200 further comprises a tuning arrangement 220 for varying an optical path length of the first and second output beams 20a, 20b between the first and second reflecting surfaces 211, 212. This path length is varied to tune the etalon 210 to a particular resonant condition, in which the path length between the reflecting surfaces 211, 212 substantially matches an integral number of wavelengths, to facilitate a transmission of radiation through the etalon 210.

The etalon 210 is tuned so that the first output beam 20a which propagates normally to the reflecting surfaces 211, 212, comprises an optical path length which is slightly less than an integral number of wavelengths, whereas the second output beam 20b which propagates at an acute angle with respect to the reflecting surfaces 211, 212, comprises an optical path length which is slightly greater than the integral number of wavelengths (namely slightly above a resonant condition). In this respect, the etalon 210 is tuned so that the first and second output beams 20a, 20b comprise an optical path length through the etalon 210 which is either side of resonant condition.

The first and second beam 20a, 20b which pass out from the etalon 210 are collected at a detector. In a preferred embodiment, the system 200 comprises two detectors 240, 241 for separately receiving radiation from each beam 20a, 20b and for detecting an intensity of each beam 20a, 20b. The or each detector 240, 241 is communicatively coupled to a processor 250 which is arranged to process signals from the or each detector 240, 241. The signals communicated to the processor 250 are representative of the intensity of the detected radiation beam and these signals are processed by the processor 250 to determine a relative intensity between the beams of radiation. Any variation in the frequency of the beam 10 of radiation which is incident upon the beamsplitter 100 manifests as a variation in the relative intensity of the first and second output beams 20a, 20b detected at the or each detector 240, 241, owing to the disposition of the first and second beams 20a, 20b either side of a resonant condition. The change in relative intensity can then be equated to a relative change in frequency of the laser beam 10 incident upon the beamsplitter 100.

In an embodiment, the tuning arrangement 220 comprises a refracting optical element 221 disposed within an optical path between the beamsplitter 100 and the etalon 210. The refracting optical element 221, such as a prism, is mounted upon a rotation stage 202 for separate rotation of the element 221 relative to the beamsplitter 100, and the element 221 is arranged to receive the first and second output beams 20a, 20b from the beamsplitter 100. The element 221 is orientated relative to the beamsplitter 100 such that the first and second output beams 20a, 20b become incident upon the element 221 at an angle which corresponds substantially with an angle that offers minimal refraction through the element 221. By rotating the stage 202 upon which the element 221 is disposed, it is possible to steer the first and second output beams 20a, 20b toward the etalon 210, such that the respective path lengths become disposed either side of a resonant path length condition. However, it is to be appreciated that other tuning arrangements 220 may also be used and would be apparent to the skilled addressee, to vary the optical path length between the reflecting surfaces 211, 212 of the etalon 210. For example, the tuning arrangement 220 may comprise a translation stage (not shown) for moving the reflecting surfaces 211, 212 relative to the other to effect a physical separation of the reflecting surfaces 211, 212, means (not shown) adjusting a pressure in a gas medium between the reflecting surfaces 211, 212 and/or means (not shown) for varying a temperature of the medium between the reflecting surfaces 211, 212. However, it is found that varying a physical separation of the reflecting surfaces 211, 212 would result in mechanical instabilities, while the latter two methods are found to be time consuming. Accordingly, the following description is based on a tuning arrangement 220 comprising a refracting element 221, namely a prism, since as will be shown below, the prism can itself be rotated to manipulate the propagation direction of the first and second output beams 20a, 20b to the etalon 210 and is less susceptible to mechanical instabilities. In this respect, the beamsplitter and tuning arrangement can be used to offer fine angular control of the output beams 20a, 20b and substantially preserve the relative alignment of the beams 20a, 20b.

The steered angle ($\beta$) of the first and second output beam 20a, 20b relative to the prism 221 is shown below in equation 3 as a function of the incident angle ($\Phi_i$) upon a prism 221 having a prism apex angle ($\alpha$).

$$\beta = \sin^{-1}\left\{n \cdot \sin\left[\alpha - \sin^{-1}\left(\frac{\sin\phi_i}{n}\right)\right]\right\} + \phi_i - \alpha \tag{3}$$

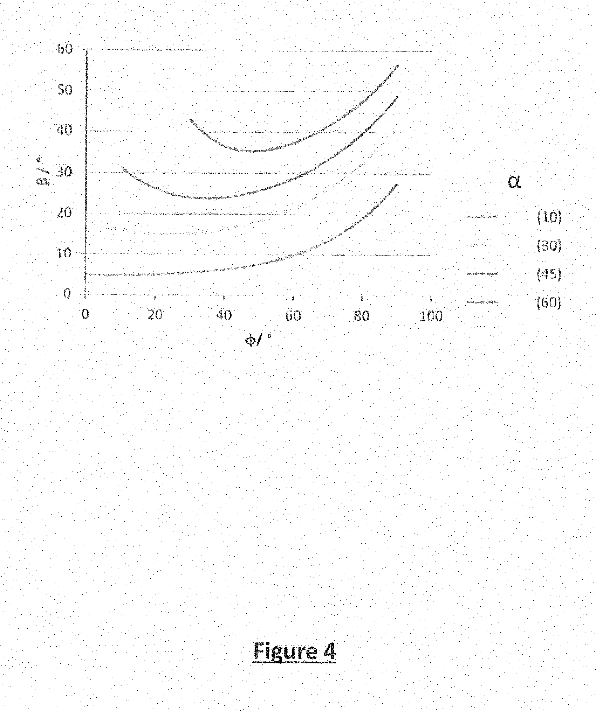

Figure 4 of the drawings provides a graphical representation of the variation in steered angle ($\beta$) with incident angle ($\Phi_i$)

for fused silica prisms having different apex angles ($\alpha$). Differentiating equation 3 with respect to incident angle ($\Phi_i$), yields the relationship:

$$\frac{d\beta}{d\phi_i} = 1 - \frac{\cos(\phi_i)\cos\left(\alpha - \sin^{-1}\left[\frac{\sin\phi_i}{n}\right]\right)}{\sqrt{\left(1 - \frac{\sin^2\phi_i}{n^2}\right)\left(1 - n^2\sin^2\left[\alpha - \sin^{-1}\left\{\frac{\sin\phi_i}{n}\right\}\right]\right)}} \tag{4}$$

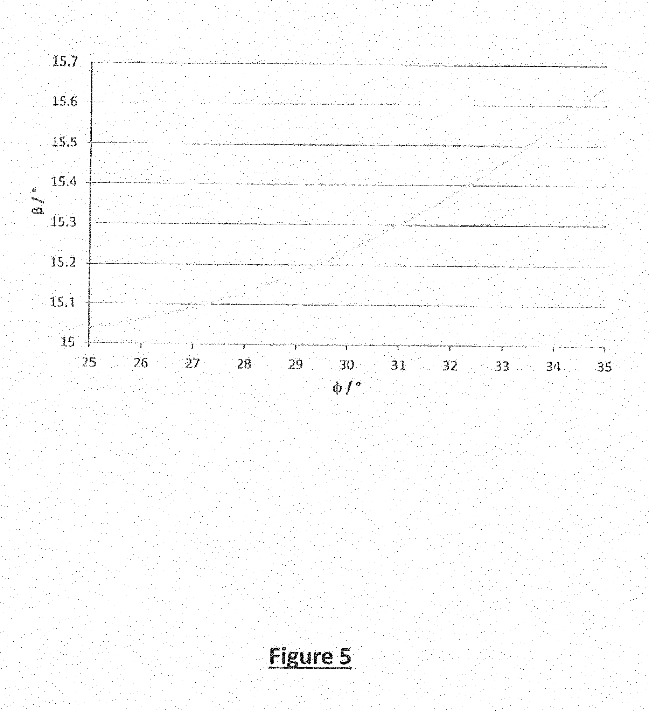

It is evident therefore that at an incident angle $\Phi_i = 30°$ and for a fused silica prism having a refractive index of approximately 1.48, then each degree of rotation of the prism 221 results in a change in the steered angle of only 0.06°. Upon referring to figure 5 of the drawings, which illustrates the variation in steered angle ($\beta$) for incident angles ($\Phi_i$) in the range of 25° to 35° it is clear that a fine adjustment in the steered angle can be obtained by varying the incident angle $\Phi_i$ and thus the angular orientation of the prism 221.

From the foregoing therefore, it is evident that the beamsplitter and frequency monitoring system offer an improved stability and fine control over the angular deviation of beams of radiation.

## Claims

1. A beamsplitter for splitting an input beam of radiation which is incident upon the beamsplitter into a first and second output beam of radiation which propagate from the beamsplitter, the beamsplitter comprising:

   - a first beamsplitting portion for generating the first output beam and a second beamsplitting portion for generating the second output beam;
   - the first portion comprising a front and rear planar surface orientated in a substantially parallel orientation;
   - the second portion comprising a front and rear planar surface orientated in a non-parallel orientation;
   - the rear surface of the first portion comprising a first coating having a relatively low reflection coefficient for the radiation, and the front surface of the second portion comprising a second coating having a relatively high reflection coefficient for the radiation;
   - such that the first and second output beams propagate in non-parallel directions.

2. A beamsplitter according to claim 1, wherein the front surface of the first portion comprises an anti-reflection coating for the input beam of radiation.

3. A beamsplitter according to claim 1 or 2, wherein the rear surface of the second portion comprises an anti-reflection coating for radiation incident thereon internally of the second portion.

4. A beamsplitter according to any preceding claim, wherein the first coating comprises a reflection coefficient of substantially 0.5 for radiation incident thereon internally of the first portion, such that substantially 50% of the energy of the radiation beam which is incident thereon is reflected and substantially 50% of the energy of the radiation beam is transmitted out from the first portion through the rear surface, to form the first output beam.

5. A beamsplitter according to any preceding claim, wherein the front surface of the second portion comprises a reflection coefficient of substantially 1 for radiation incident thereon internally of the second portion, such that substantially 100% of the energy of the radiation beam which is incident thereon is reflected and substantially 0% of the energy of the radiation beam is transmitted out of the second portion through the front surface.

6. A beamsplitter according to any preceding claim, wherein the first and second portions comprise separate portions which are coupled together to provide a low loss interface therebetween.

7. A beamsplitter according to any of claims 1 to 5, wherein the first and second portions be formed integrally.

8. A beamsplitter according to any preceding claim, wherein the first and second portions are formed of fused silica.

9. A frequency shift monitoring system for monitoring a frequency shift of a beam of radiation, the system comprising:

  - a beamsplitter according to any one of the preceding claims which is arranged to receive the beam of radiation and generate a first and second output beam;
  - an etalon comprising first and second reflecting surfaces for reflecting the first and second output beams;
  - a tuning arrangement for varying an optical path length of the first and second output beams through the etalon between the first and second reflecting surfaces; and,
  - at least one detector for detecting an intensity of the first and second output beams which is transmitted through the etalon.

10. A monitoring system according to claim 9, wherein the tuning arrangement comprises a refracting element, disposed in an optical path between the beamsplitter and the etalon, the element being rotatably mounted relative to the etalon for steering the first and second beam relative to the first and second reflecting surfaces.

11. A monitoring system according to claim 9 or 10, wherein the first output beam is directed substantially normal to the first and second reflecting surface and the second output beam is directed at an acute angle to the first and second reflective surface.

12. A monitoring system according to any of claims 9 to 11, wherein the beamsplitter is orientated relative to the refracting element, such that the first and second output beams are incident upon the element at an angle corresponding to a minimal refraction of the first and second beams through the element.

13. A monitoring system according to any of claims 9 to 12, wherein the system comprises a first and second detector for respectively detecting the intensity of the first and second output beams which are transmitted through the etalon.

14. A monitoring system according to any of claims 9 to 13, further comprising a processor for processing the intensity of the first and second output beams which are transmitted through the etalon to determine a relative change in intensity, and for subsequently determining a shift in frequency of the beam of radiation in dependence of the relative change in intensity.

**Figure 1**

**Figure 2**

**Figure 3**

Figure 4

**Figure 5**

Europäisches
Patentamt

European
Patent Office

Office européen
des brevets

## EUROPEAN SEARCH REPORT

Application Number

EP 14 27 5130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/259337 A1 (CHEN TONY K [TW] CHEN TONY K T [TW]) 24 November 2005 (2005-11-24) | 1,4-8 | INV.<br>G01J9/02<br>G02B5/04<br>G02B27/14 |
| Y | * paragraphs [0028] - [0031]; figures 5A,B * | 2,3 | |
| X | US 2010/321807 A1 (JOURNOT ERIC [FR]) 23 December 2010 (2010-12-23) | 1,5-8 | |
| Y | * paragraphs [0028] - [0055]; figure 5 * | 2 | |
| A | | 3,4 | |
| X | US 2011/026129 A1 (KUO HUEI PEI [US] ET AL) 3 February 2011 (2011-02-03) * paragraph [0030]; figure 7 * | 1,4,5,7,8 | |
| Y | WO 01/20387 A1 (CORNING INC [US]) 22 March 2001 (2001-03-22) * page 7, line 21 - page 10, line 5; figure 1 * | 2,3 | |

TECHNICAL FIELDS
SEARCHED    (IPC)

G01J
G02B
H01S

~~The present search report has been drawn up for all claims~~

| Place of search | Date of completion of the search | Examiner |
|---|---|---|
| Munich | 19 January 2015 | Baur, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   & : member of the same patent family, corresponding
   document

EPO FORM 1503 03.82 (P04C01)

<table>
<tr><td>Europäisches Patentamt<br>European Patent Office<br>Office européen des brevets</td><td>Application Number<br>EP 14 27 5130</td></tr>
</table>

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8

☐ The present supplementary European search report has been drawn up for those parts of the European patent application which relate to the invention first mentioned in the claims (Rule 164 (1) EPC).

The Search Division considers that the present European patent application does not comply with the requirements of unity of invention and relates to several inventions or groups of inventions, namely:

1. claims: 1-8

    beamsplitter
                    ---

2. claims: 9-14

    frequency shift monitoring system with a beam splitter
                    ---

**ANNEX TO THE EUROPEAN SEARCH REPORT
ON EUROPEAN PATENT APPLICATION NO.**

EP 14 27 5130

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2015

| Patent document cited in search report | | Publication date | Patent family member(s) | | Publication date |
|---|---|---|---|---|---|
| US 2005259337 | A1 | 24-11-2005 | NONE | | |
| US 2010321807 | A1 | 23-12-2010 | EP | 2104871 A1 | 30-09-2009 |
| | | | FR | 2910979 A1 | 04-07-2008 |
| | | | US | 2010321807 A1 | 23-12-2010 |
| | | | WO | 2008080915 A1 | 10-07-2008 |
| US 2011026129 | A1 | 03-02-2011 | CN | 101981488 A | 23-02-2011 |
| | | | DE | 112008003797 T5 | 24-02-2011 |
| | | | JP | 5265757 B2 | 14-08-2013 |
| | | | JP | 2011516916 A | 26-05-2011 |
| | | | KR | 20100135778 A | 27-12-2010 |
| | | | US | 2011026129 A1 | 03-02-2011 |
| | | | WO | 2009123590 A1 | 08-10-2009 |
| WO 0120387 | A1 | 22-03-2001 | AU | 7333400 A | 17-04-2001 |
| | | | CA | 2385008 A1 | 22-03-2001 |
| | | | CN | 1390315 A | 08-01-2003 |
| | | | EP | 1214621 A1 | 19-06-2002 |
| | | | WO | 0120387 A1 | 22-03-2001 |

EPO FORM P0459

For more details about this annex : see Official Journal of the European Patent Office, No. 12/82